(19) Europäisches Patentamt / European Patent Office / Office européen des brevets

(11) **EP 3 625 966 B1**

(12) **FASCICULE DE BREVET EUROPEEN**

(45) Date de publication et mention
de la délivrance du brevet:
**16.11.2022   Bulletin 2022/46**

(21) Numéro de dépôt: **18724249.0**

(22) Date de dépôt: **17.05.2018**

(51) Classification Internationale des Brevets (IPC):
*H04N 13/194* (2018.01)       *H04N 5/232* (2006.01)
*H04N 21/2343* (2011.01)      *H04N 21/4728* (2011.01)
*H04N 21/81* (2011.01)        *H04N 21/2662* (2011.01)
*H04N 21/218* (2011.01)       *H04N 21/472* (2011.01)

(52) Classification Coopérative des Brevets (CPC):
**H04N 21/816; H04N 5/23238; H04N 13/194;
H04N 21/21805; H04N 21/234345;
H04N 21/234363; H04N 21/23439; H04N 21/2662;
H04N 21/47202; H04N 21/4728;** H04N 13/344;
H04N 13/383

(86) Numéro de dépôt international:
**PCT/EP2018/062873**

(87) Numéro de publication internationale:
**WO 2018/211000 (22.11.2018 Gazette 2018/47)**

(54) **PROCÉDÉ DE COMMUNICATION D'UNE VIDÉO IMMERSIVE**

KOMMUNIKATIONSVERFAHREN FÜR IMMERSIVES VIDE

COMMUNICATION PROCESS FOR IMMERSIVE VIDEO

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **19.05.2017   FR 1754465**

(43) Date de publication de la demande:
**25.03.2020   Bulletin 2020/13**

(73) Titulaire: **Sagemcom Broadband SAS
92500 Rueil-Malmaison (FR)**

(72) Inventeurs:
• **BERGER, J r me
92500 Rueil Malmaison (FR)**

• **LANDAIS, Thomas
92500 Rueil Malmaison (FR)**

(74) Mandataire: **Cabinet Le Guen Maillet
3, impasse de la Vigie
CS 71840
35418 Saint-Malo Cedex (FR)**

(56) Documents cités:
**EP-A1- 2 346 021         WO-A1-2013/079420
WO-A1-2015/192117     FR-A1- 2 976 149
FR-A1- 2 989 790        US-A1- 2004 125 148
US-A1- 2013 141 523    US-A1- 2016 012 855
US-B2- 9 183 560**

EP 3 625 966 B1

**Description**

La présente invention concerne un procédé de communication de vidéos immersives, un système et des dispositifs aptes à mettre en œuvre le procédé.

Ces dernières années ont vu une apparition d'une pluralité de modes de visualisation d'images et de vidéos. Ainsi, alors que jusque dans les années « 2000 », on se cantonnait aux images à deux dimensions (2D), des vidéos stéréoscopiques, des vidéos en trois dimensions (3D) et des vidéos immersives représentant une même scène prise à « 360 » degrés ont vu leur apparition.

A l'heure actuelle, les systèmes de diffusion de vidéos immersives ne nécessitent plus d'utiliser des salles dédiées comprenant un écran à « 360 » degrés et une pluralité de dispositifs de projection d'images projetant chacun un point de vue d'une vidéo immersive. Il est en effet possible maintenant d'obtenir un système de diffusion de vidéos immersives à partir de lunettes, dites lunettes immersives ou lunettes 3D immersives, comprenant un dispositif d'affichage d'images intégré.

Ce mode de mise en œuvre plus simple permet d'envisager une démocratisation des systèmes de diffusion de vidéos immersives. Ainsi, dans le futur, des utilisateurs pourront visualiser des vidéos immersives dans leur habitation. Ces vidéos immersives seront fournies par des opérateurs et transmises à travers des réseaux de communication tels que le réseau internet, à l'image de ce qui se fait actuellement avec la diffusion de vidéos 2D par internet.

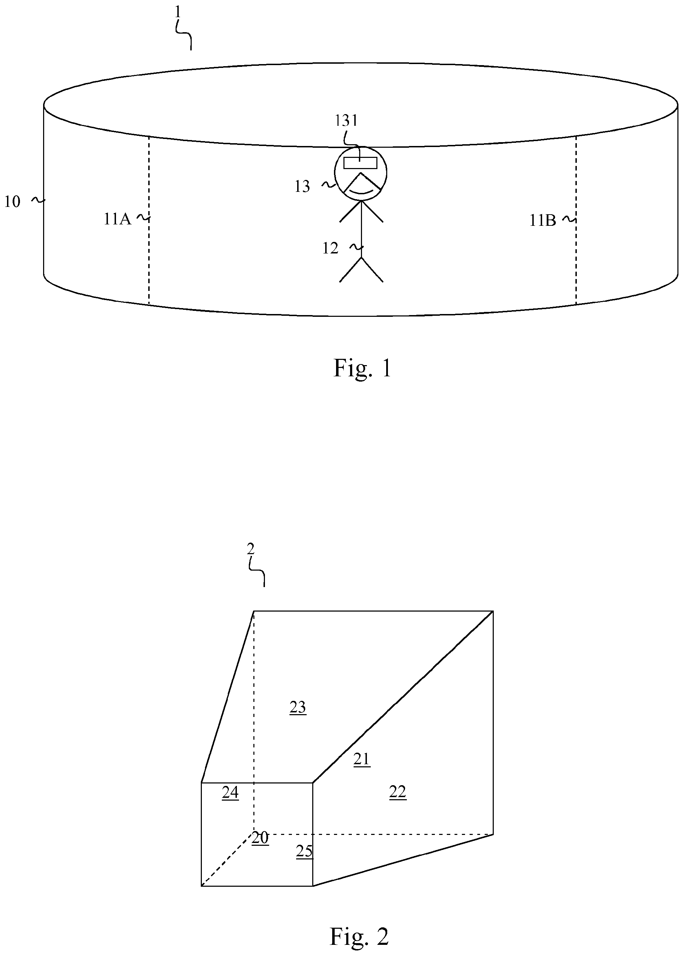

La **Fig. 1** illustre schématiquement un exemple de système de diffusion de vidéos immersives 1. Dans ce système, un utilisateur 12 porte une paire de lunettes immersives 13. Cette paire de lunettes immersives 13 comprend un module de traitement 131 et un module de visualisation d'images non représenté. Le module de visualisation d'images comprend par exemple un écran faisant face à chaque œil de l'utilisateur 12. Le module de visualisation d'images permet à l'utilisateur de visualiser une vidéo à « 360 » degrés symbolisée par un anneau 10 dans la Fig. 1. Dans ce système, la vidéo immersive a été reçue par le module de traitement 131 par l'intermédiaire d'un réseau de communication, puis décodée par le module de traitement 131 avant son affichage sur le module de visualisation d'images.

Lors de l'affichage, le système de diffusion de vidéos immersives 1 définit une forme géométrique simple (telle qu'un anneau, une sphère, un dôme ou un cube) sur laquelle est plaquée la vidéo immersive. Toutefois, l'utilisateur 12 ne voit qu'une partie de la vidéo immersive limitée par son champ visuel. Ainsi, dans la Fig. 1, l'utilisateur 12 ne voit qu'une partie de la vidéo immersive lui faisant face et limitée par des traits pointillés 11A et 11B. Le reste de la vidéo immersive n'est utilisé que si l'utilisateur 12 change de point de vue sur la vidéo.

En plus d'offrir un point de vue à l'utilisateur beaucoup plus large qu'une vidéo HD classique (« High Définition » en terminologie anglo-saxonne : $1920 \times 1080$ pixels), une vidéo immersive possède généralement une résolution spatiale et une résolution temporelle nettement supérieure à une vidéo HD classique. De telles caractéristiques impliquent un débit très important qui peut être difficilement supportable par un réseau.

Dans des systèmes de diffusion de vidéos immersives connus, un serveur génère plusieurs versions d'une même vidéo immersive. Chaque version correspond à un point de vue de la vidéo, l'ensemble des versions couvre tous les points de vue possibles de la vidéo immersive. Dans chaque version, une partie de la vidéo correspondant à un champ visuel d'un utilisateur (*i.e.* ce que voit l'utilisateur) est compressée en qualité optimale. Les parties de la vidéo ne correspondant pas au champ visuel de l'utilisateur (*i.e.* ce que ne voit pas l'utilisateur car en dehors de son champ visuel) sont compressées dans une qualité inférieure. Lorsque l'utilisateur se focalise sur un point de vue, la version correspondant à son point de vue lui est transmise par le serveur. Lorsque l'utilisateur change de point de vue, il demande au serveur de lui transmettre une nouvelle version correspondant à son nouveau point de vue. En attendant la réception de cette nouvelle version, il utilise les parties compressées dans une qualité inférieure de la version précédente pour afficher des images correspondant au nouveau point de vue à l'utilisateur.

Le document *w16189, WD on ISO/IEC 23000-20 Omnidirectional Media Application Format, Byeongdoo Choi, Ye-Kui Wang, Miska M. Hannuksela* décrit un ensemble de formes géométriques 3D sur lesquelles peuvent être plaquées des vidéos immersives. L'une de ces formes géométriques 3D est une pyramide tronquée telle que décrite en Fig. 2.

La **Fig. 2** illustre schématiquement une forme géométrique 3D 2 sur laquelle peut être plaquée une vidéo immersive.

La forme géométrique 3D 2 comprend une base carrée 21, des faces trapézoïdales latérales 22, 23, 24 et 25 et une face carrée 20 opposée et parallèle à la base carrée 21. La base carrée 21 a une surface supérieure à la face 20. La partie de la vidéo immersive correspondant au champ visuel de l'utilisateur est plaquée sur la base carrée 21. Les parties de la vidéo immersive en dehors du champ visuel de l'utilisateur mais proches de celui-ci sont plaquées sur les faces trapézoïdales latérales. Les parties de la vidéo immersives dans le dos de l'utilisateur sont plaquées sur la face carrée 20. Par conséquent, la partie de la vidéo immersive vue par l'utilisateur possède une grande résolution, les parties situées en dehors du champ visuel de l'utilisateur ont une résolution diminuant en fonction d'une distance aux limites du champ visuel de l'utilisateur jusqu'à une résolution minimale. Lors du codage de cette vidéo immersive, la partie de la vidéo immersive destinée à être plaquée sur la base carrée 21 est faiblement compressée, la partie de la vidéo immersive destinée à être plaquée sur la face carrée 20 est fortement compressée et les parties de la vidéo immersive destinées à être plaquées sur les faces trapézoïdales latérales 23 à 25 ont un taux de compression intermédiaire pouvant être adapté en fonction de la distance à la base carrée 21. Ainsi, plus l'utilisateur s'éloigne de son point de vue initial, plus l'aspect de la vidéo immersive est dégradé.

On note donc que dans ce système existant, lorsqu'un utilisateur change de point de vue, il n'obtient pas une vidéo immersive de qualité optimale immédiatement, mais doit attendre que le serveur lui transmette une nouvelle version de la vidéo immersive correspondant à son nouveau point de vue. Une telle latence peut dérouter un utilisateur.

FR2976149A1 divulgue un dispositif pour obtenir par exemple un programme de télévision disponible en différentes versions correspondant à différents débits binaires de transmission pour la transmission à un récepteur de contenu via un réseau de communication en vue de leur affichage par un écran.

US2016/012855A1 divulgue un procédé de lecture d'un contenu vidéo, impliquant l'affichage de sections décodées d'une première image en fonction de la synchronisation de la lecture du contenu vidéo, te telle sorte qu'une partie de la première image soit affichée.

Il est souhaitable de pallier les inconvénients de l'état de la technique. Il est notamment souhaitable de fournir une solution où, lors d'un changement de point de vue, la latence pour obtenir une nouvelle version de la vidéo immersive est très faible, voire nulle.

Il est de plus souhaitable de fournir une solution qui soit simple à mettre en œuvre et à faible coût.

Selon un premier aspect de la présente invention, la présente invention concerne un procédé de communication d'une vidéo immersive entre un serveur et un équipement de visualisation relié entre eux par un lien de communication comprenant un nœud réseau intermédiaire, ladite vidéo immersive étant stockée sur le serveur sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent. Le procédé est exécuté à intervalles réguliers prédéterminés ou suite à un changement de point de vue de l'utilisateur et comprend : obtenir une description d'un point de vue de l'utilisateur ; transmettre en direction du serveur une première requête en vue de recevoir une représentation correspondant audit point de vue, dite représentation sélectionnée, déterminée à partir d'une description de chaque représentation et de la description du point de vue de l'utilisateur ; recevoir du nœud réseau intermédiaire la représentation sélectionnée en réponse à la première requête, le nœud réseau intermédiaire recevant en permanence au moins un sous-ensemble des représentations , dit sous-ensemble global, de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation.,

la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

Ainsi, le temps de latence pour passer d'une représentation à une autre, d'une même version ou de deux versions différentes, est réduit, puisque le nœud réseau intermédiaire répond à la requête de l'équipement de visualisation à la place du serveur et que ce nœud réseau intermédiaire est plus proche de l'équipement de visualisation.

Selon un mode de réalisation, l'équipement de visualisation obtient une information représentative de son débit de réception, et la représentation sélectionnée est déterminée parmi des représentations de la version correspondant audit point de vue ayant un débit inférieur ou égal au débit de réception.

Selon un mode de réalisation, le sous-ensemble global comprend la représentation sélectionnée et un sous-ensemble de représentations, dit sous-ensemble supplémentaire. comprenant au moins une représentation déterminée suivant un critère prédéfini.

Selon un mode de réalisation, le sous-ensemble supplémentaire comprend des représentations de versions correspondant à des points de vue proches selon un critère de proximité prédéfini du point de vue de l'utilisateur.

Selon un mode de réalisation, le sous-ensemble global est déterminé par le nœud réseau intermédiaire ou par l'équipement de visualisation.

Selon un mode de réalisation, l'équipement de visualisation obtient la description d'un point de vue de l'utilisateur, dit point de vue courant, et une information représentative d'une vitesse de changement de point de vue de l'utilisateur pendant une visualisation d'un groupe d'images courant, et détermine une représentation d'une version à recevoir pour un groupe d'images suivant le groupe d'images courant à partir d'un point de vue, dit point de vue anticipé, déterminé à partir du point de vue courant et de ladite vitesse de changement de point de vue.

Selon un mode de réalisation, le nœud réseau intermédiaire est une passerelle résidentielle ou un multiplexeur d'accès à une ligne d'abonné numérique.

Selon un deuxième aspect de l'invention, l'invention concerne un procédé de communication d'une vidéo immersive entre un serveur et un équipement de visualisation relié entre eux par un lien de communication comprenant un nœud réseau intermédiaire, ladite vidéo immersive étant stockée sur le serveur sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment chaque représentation d'une même version avant un débit différent. Le procédé est exécuté à intervalles réguliers prédéterminés ou suite à un changement de point de vue de l'utilisateur et comprend : recevoir une première requête de l'équipement de visualisation dans laquelle l'équipement de visualisation demande à recevoir une représentation correspondant à un point de vue de l'utilisateur sur la vidéo immersive, dite représentation sélectionnée, déterminée à partir d'une description de chaque représentation et d'une information représentative du point de vue de l'utilisateur; transmettre la représentation sélectionnée en réponse à la première requête. le nœud réseau intermédiaire recevant en permanence au moins un sous-ensemble des représentations, dit sous-ensemble global, de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation.

la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

Selon un troisième aspect de l'invention, l'invention concerne un équipement de visualisation d'une vidéo immersive relié à un serveur par un lien de communication comprenant un nœud réseau intermédiaire, ladite vidéo immersive étant stockée sur le serveur sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent. L'équipement de visualisation comprend : des moyens d'obtention pour obtenir une description d'un point de vue de l'utilisateur ; des moyens de transmission pour transmettre en direction du serveur une première requête en vue de recevoir une représentation correspondant audit point de vue, dite représentation sélectionnée, déterminée à partir d'une description de chaque représentation et de la description du point de vue de l'utilisateur ; des moyens de réception pour recevoir du nœud réseau intermédiaire la représentation sélectionnée en réponse à la première requête, le nœud réseau intermédiaire recevant en permanence au moins un sous-ensemble, dit sous-ensemble global, des représentations de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation.

la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

Selon un quatrième aspect de l'invention, l'invention concerne un nœud réseau intermédiaire situé sur un lien de communication reliant un serveur à un équipement de visualisation de vidéos immersives. une vidéo immersive étant stockée sur le serveur sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent. Le nœud réseau intermédiaire comprend : des moyens de réception pour recevoir une première requête de l'équipement de visualisation dans laquelle l'équipement de visualisation demande à recevoir une représentation correspondant à un point de vue de l'utilisateur sur la vidéo immersive. dite représentation sélectionnée, déterminée à partir d'une description de chaque représentation et d'une information représentative du point de vue de l'utilisateur ; des moyens de transmission pour transmettre la représentation sélectionnée en réponse à la première requête, le nœud réseau intermédiaire recevant en permanence au moins un sous-ensemble, dit sous-ensemble global, des représentations de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation.

la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

Selon un cinquième aspect de l'invention, l'invention concerne un système permettant une communication d'une vidéo immersive comprenant un équipement de visualisation selon le troisième aspect et un nœud réseau intermédiaire selon le quatrième aspect.

Selon un sixième aspect, l'invention concerne un programme d'ordinateur, comprenant des instructions pour mettre en œuvre, par un dispositif, le procédé selon le premier aspect ou le procède selon le deuxième aspect, lorsque ledit programme est exécuté par un processeur dudit dispositif.

Selon un septième aspect de l'invention, l'invention concerne des moyens de stockage, stockant un programme d'ordinateur comprenant des instructions pour mettre en œuvre, par un dispositif, le procédé selon le premier aspect ou le procédé selon le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de système de diffusion de vidéos immersives;
- la Fig. 2 illustre schématiquement une forme géométrique 3D 2 sur laquelle peut être plaquée une vidéo immersive;
- la Fig. 3 illustre schématiquement un système dans lequel est mise en œuvre l'invention ;
- la Fig. 4A illustre schématiquement un exemple d'architecture matérielle d'une passerelle résidentielle selon l'invention ;
- la Fig. 4B illustre schématiquement un exemple d'architecture matérielle d'un client selon l'invention ;
- la Fig. 4C illustre schématiquement un exemple d'architecture matérielle d'un serveur selon l'invention ;
- la Fig. 5A illustre schématiquement un procédé d'abonnement à une pluralité de groupes multipoints correspondant chacun à une représentation d'une vidéo immersive ; et,
- la Fig. 5B illustre schématiquement un procédé de diffusion d'une vidéo immersive.

Par la suite, l'invention est décrite dans le cadre d'un utilisateur utilisant un équipement de visualisation tel que des lunettes immersives comprenant un module de traitement. L'invention est toutefois adaptée à d'autres équipements de visualisation tels qu'un équipement de visualisation comprenant une salle dédiée à la diffusion de vidéos immersives équipée d'un écran à « 360 » degrés ou d'un écran en forme de dôme et d'une pluralité de dispositifs de projection d'images projetant chacun un point de vue d'une vidéo immersive. Chaque dispositif de projection d'images est alors relié à un module de traitement externe. Dans ce cas, des moyens connectés au module de traitement externe permettent de déterminer le point de vue sur la vidéo immersive de chaque utilisateur présent dans la salle. Par ailleurs, l'invention est adaptée à un contexte où il y aurait plusieurs utilisateurs ayant chacun des points de vue potentiellement différents.

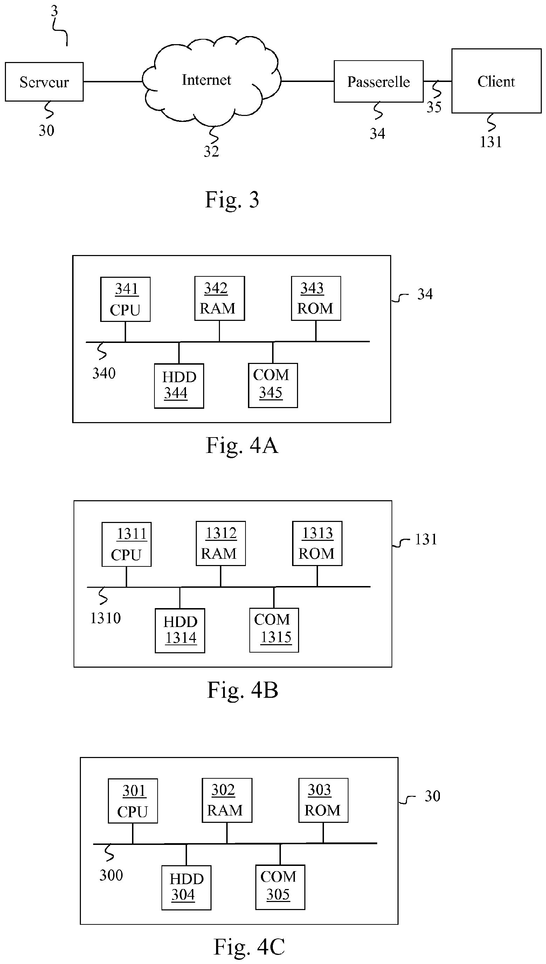

La **Fig. 3** illustre schématiquement un système 3 dans lequel est mise en œuvre l'invention.

Le système 3 comprend un serveur 30 relié par un réseau tel qu'un réseau internet 32 à une passerelle résidentielle 34 (« gateway » en terminologie anglo-saxonne), appelée simplement passerelle par la suite, située par exemple dans une habitation. La passerelle 34 permet de connecter un réseau local 35 (« LAN : Local Area Network » en terminologie anglo-saxonne) au réseau 32. Le réseau local 35 est par exemple un réseau sans fils tel qu'un réseau Wi-Fi (ISO/CEI 8802-11) et/ou filaire tel qu'un réseau Ethernet (ISO/CEI 8802-3). Un module de traitement 131, appelé client par la suite, est compris dans une paire de lunettes immersives et connecté au réseau local 35.

Le serveur 30 stocke une pluralité de versions d'une vidéo immersive. Chaque version correspond à un point de vue différent sur la vidéo immersive et l'ensemble des versions couvre l'ensemble des points de vue possibles sur la vidéo. Chaque version est optimisée pour le point de vue auquel elle correspond. Par exemple chaque version possède une qualité maximale dans une zone de la vidéo immersive correspondant au champ visuel d'un utilisateur visualisant la vidéo immersive suivant ledit point de vue, et une qualité diminuant progressivement en dehors de ladite zone en fonction d'une distance à des limites dudit champ visuel. Dans un mode de réalisation, le serveur stocke « 30 » versions de la vidéo immersive. Dans un mode de réalisation, chaque version de la vidéo immersive est destinée à être plaquée sur la forme géométrique 3D décrite en relation avec la Fig. 2. La partie de la vidéo immersive dans le champ visuel de l'utilisateur a donc une résolution prédéterminée importante et un taux de compression prédéterminé faible, et les parties en dehors du champ visuel de l'utilisateur ont une résolution inférieure à la résolution prédéterminée et un taux de compression supérieur au taux de compression prédéterminé et décroissants en fonction de la distance aux limites du champ visuel de l'utilisateur jusqu'à respectivement une résolution minimale et un taux de compression maximal.

Le serveur 30 stocke une pluralité de représentations pour chaque version. Une représentation est un flux vidéo binaire compressé selon un standard de compression vidéo tel que le standard de compression vidéo H.264/MPEG-4 AVC (codage vidéo avancé : « Advanced Video Coding » en terminologie anglo-saxonne) ou le standard H.265/MPEG-4 HEVC (Codage vidéo hautement efficace : « High Efficiency Video Coding » en terminologie anglo-saxonne). Lorsque le serveur 30 stocke plusieurs représentations d'une version, chaque représentation a un débit différent, *i.e.* chaque représentation est plus ou moins compressée. Dans un mode de réalisation, le serveur 30 stocke « 5 » représentations par version, ce qui fait un total de « 150 » représentations stockées par le serveur 30.

Chaque représentation est découpée en groupes d'images (« Group of Pictures (GOP) » en terminologie anglo-saxonne) décodables indépendamment de durée D prédéfinie. De cette manière, il est possible de passer d'une représentation à une autre en limite de GOP. Dans un mode de réalisation, la durée D est fixe et va de « 20 »ms à « 1 »s.

Le serveur possède une description de chaque représentation de la vidéo immersive qu'il stocke. Un moyen connu de décrire plusieurs représentations d'un même document multimédia est d'utiliser un fichier de description de présentation d'un média (« media presentation description (MPD) » en terminologie anglo-saxonne) tel que décrit par la norme MPEG-DASH (ISO/IEC 23009-1). Toutefois, les fichiers MPD sont adaptés pour décrire une vidéo en termes de norme de compression vidéo (AVC, HEVC, ...), de débit, de résolution spatiale et temporelle, mais pas pour décrire des aspects spécifiques à un point de vue sur une vidéo immersive. Dans un mode de réalisation, l'ensemble des représentations d'une même vidéo immersive stockées par le serveur 30 est décrit dans un fichier manifeste de type MPD comprenant pour chaque représentation des champs représentant la norme de compression vidéo utilisée, le débit, les résolutions spatiales et temporelles et des champs supplémentaires représentant un azimut, un angle d'élévation et optionnellement un angle de roulis.

Un autre moyen connu de décrire plusieurs représentations d'un même document multimédia est d'utiliser un fichier de liste de lecture (« playlist » en terminologie anglo-saxonne) tel que décrit par la norme HLS. Toutefois, les fichiers liste de lecture sont adaptés pour décrire une vidéo en termes de norme de compression vidéo, de débit, de résolution spatiale et temporelle, mais pas pour décrire des aspects spécifiques à un point de vue sur une vidéo immersive. Dans un mode de réalisation, l'ensemble des représentations d'une même vidéo immersive stockées par le serveur 30 est décrit dans un fichier manifeste de type liste de lecture comprenant pour chaque représentation des champs représentant la norme de compression vidéo utilisée, le débit, les résolutions spatiales et temporelles et des champs supplémentaires représentant un azimut, un angle d'élévation et optionnellement un angle de roulis.

Le serveur 30 est adapté pour diffuser la vidéo immersive vers plusieurs clients simultanément, chaque client recevant une représentation adaptée à son point de vue et chaque client affichant un même instant de la vidéo.

Chaque représentation de la vidéo immersive est diffusée sur un groupe multipoint (« multicast » en terminologie anglo-saxonne) auquel un dispositif récepteur peut s'abonner. Une représentation n'est réellement transmise sur le réseau que lorsqu'au moins un dispositif récepteur est abonné au groupe multipoint correspondant à cette représentation.

De plus, on sait que des données transmises sur un réseau de type internet sont transmises sous forme de paquets et que pour atteindre leur destination, ces paquets traversent des routeurs qui se chargent de diriger ces paquets vers leur destination. Lorsque plusieurs dispositifs récepteurs situés sur deux branches différentes du réseau sont abonnés à un même groupe multipoint transmis par un même dispositif émetteur, le dispositif émetteur ne transmet qu'une fois les paquets correspondant audit groupe multipoint. Le dernier routeur multipoint en commun entre les deux dispositifs récepteurs se charge alors de dupliquer les paquets pour que chaque dispositif récepteur puisse recevoir les paquets correspondant au groupe multipoint auquel il est abonné, ce qui permet de ne pas engorger la route commune entre les deux dispositifs récepteurs avec des paquets redondants.

La **Fig. 4A** illustre schématiquement un exemple d'architecture matérielle de la passerelle 34. La passerelle 34 comprend alors, reliés par un bus de communication 340: un processeur ou CPU (« Central Processing Unit » en anglais) 341 ; une mémoire vive RAM (« Random Access Memory » en anglais) 342 ; une mémoire morte ROM (« Read Only Memory » en anglais) 343 ; une unité de stockage ou un lecteur de support de stockage, tel qu'un lecteur de cartes SD (« Secure Digital » en anglais) 344 ; un ensemble d'interfaces de communication 345 permettant de connecter la passerelle 34 au serveur 30 à travers le réseau 32 et au client 131 à travers le réseau local 35.

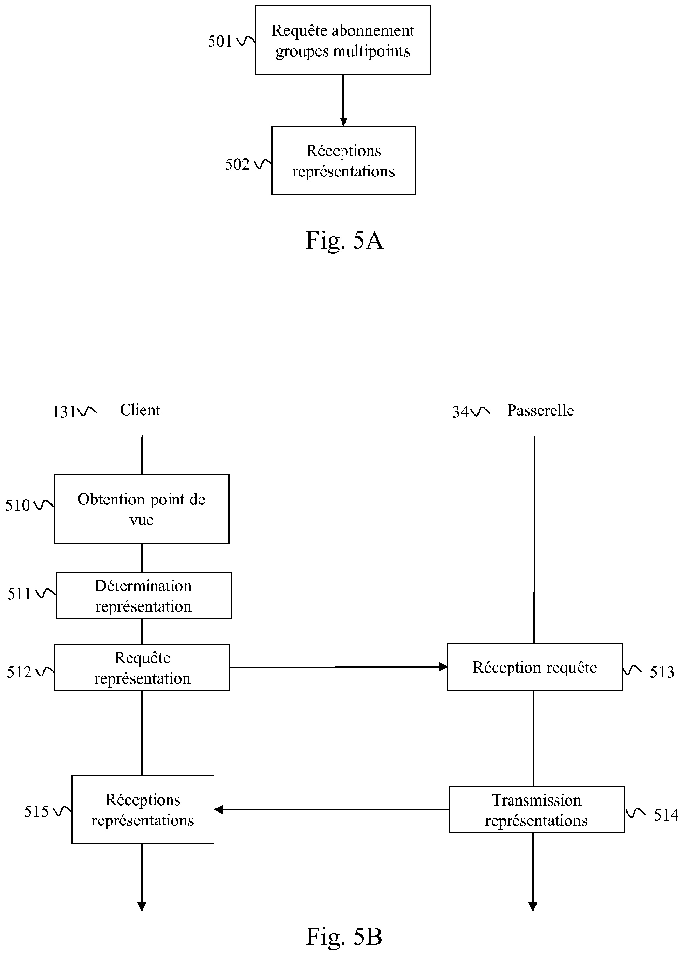

Le processeur 341 est capable d'exécuter des instructions chargées dans la RAM 342 à partir de la ROM 343, d'une mémoire externe (non représentée), d'un support de stockage, tel qu'une carte SD, ou d'un réseau de communication. Lorsque la passerelle 34 est mise sous tension, le processeur 341 est capable de lire de la RAM 342 des instructions et de les exécuter. Ces instructions forment un programme d'ordinateur causant la mise en œuvre, par le processeur 341, d'une partie concernant la passerelle 34 des procédés décrits en relation avec les Figs. 5A et 5B.

La **Fig. 4B** illustre schématiquement un exemple d'architecture matérielle du client 131. Le client 131 comprend alors, reliés par un bus de communication 1310: un processeur ou CPU (« Central Processing Unit » en anglais) 1311 ; une mémoire vive RAM (« Random Access Memory » en anglais) 1312 ; une mémoire morte ROM (« Read Only Memory » en anglais) 1313 ; une unité de stockage ou un lecteur de support de stockage, tel qu'un lecteur de cartes SD (« Secure Digital » en anglais) 1314 ; un ensemble d'interfaces de communication 1315 permettant de connecter le client 131 à la passerelle 34 à travers le réseau local 35.

Le processeur 1311 est capable d'exécuter des instructions chargées dans la RAM 1312 à partir de la ROM 1313, d'une mémoire externe (non représentée), d'un support de stockage, tel qu'une carte SD, ou d'un réseau de communication. Lorsque la passerelle 1314 est mise sous tension, le processeur 1311 est capable de lire de la RAM 1312 des instructions et de les exécuter. Ces instructions forment un programme d'ordinateur causant la mise en œuvre, par le processeur 1311, d'une partie concernant le client 131 du procédé décrit en relation avec la Fig. 5B.

La **Fig. 4C** illustre schématiquement un exemple d'architecture matérielle du serveur 30. Le serveur 30 comprend alors, reliés par un bus de communication 300: un processeur ou CPU (« Central Processing Unit » en anglais) 301 ; une mémoire vive RAM (« Random Access Memory » en anglais) 302 ; une mémoire morte ROM (« Read Only Memory » en anglais) 303 ; une unité de stockage ou un lecteur de support de stockage, tel qu'un lecteur de cartes SD (« Secure Digital » en anglais) 304 ; un ensemble d'interfaces de communication 305 permettant de connecter le serveur 30 à la passerelle 34 à travers le réseau 32.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque la passerelle 304 est mise sous tension, le processeur 301 est capable de lire de la RAM 302 des instructions et de les exécuter. Ces instructions forment un programme d'ordinateur causant la mise en œuvre, par le processeur 301, d'une partie concernant le serveur 30 du procédé décrit en relation avec les Figs. 5A.

Tout ou partie des procédés décrits en relation avec les Figs. 5A et 5B, peut être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La **Fig. 5A** illustre schématiquement un procédé d'abonnement à une pluralité de groupes multipoints correspondant chacun à une représentation d'une vidéo immersive.

Comme nous l'avons vu plus haut, si le client 131 devait s'adresser directement au serveur 30 pour obtenir une nouvelle représentation de la vidéo immersive lors d'un changement de point de vue de l'utilisateur, le temps de latence sous-jacent à la récupération de la représentation correspondant au nouveau point de vue entraînerait une dégradation temporaire du rendu de la vidéo immersive. Pour pallier ce problème dans le cadre de l'invention, le client 131 n'obtient pas chaque représentation du serveur 30 mais d'un nœud intermédiaire du réseau, plus proche du client 131, ce qui permet de réduire le temps de latence. Toutefois, pour qu'un nœud intermédiaire du réseau puisse fournir une représentation demandée par le client 131, il faut que ce nœud possède cette représentation. Dans le mode de réalisation de la Fig. 5A, la passerelle 34 joue un rôle de nœud intermédiaire. Dans d'autres modes de réalisation, ce rôle de nœud intermédiaire pourrait être joué par d'autres nœuds du réseau tel qu'un DSLAM (multiplexeur d'accès à une ligne d'abonné numérique : « Digital Subscriber Line Access Multiplexer » en terminologie anglo-saxonne).

Dans une étape 501, la passerelle 34 transmet une requête au serveur 30 en vue de recevoir chaque représentation de la vidéo immersive stockée par le serveur 30. On suppose ici que la passerelle 34 a préalablement reçu de la part du serveur 30 le fichier manifeste décrivant toutes les représentations de la vidéo immersives. Dans un mode de réalisation, lorsque le client 131 est activé, il demande au serveur 30 le fichier manifeste. En retour le serveur 30 transmet le fichier manifeste au client 131. Lors de son passage par la passerelle 34, le fichier manifeste est sauvegardé par la passerelle 34, ce qui permet à celle-ci de l'utiliser pour demander la transmission de chaque représentation. Dans le mode de réalisation de l'invention où chaque représentation est transmise sur un groupe multipoint, lors de l'étape 501 la passerelle 34 s'abonne à chaque groupe multipoint correspondant à une représentation de la vidéo immersive. Si aucun nœud du réseau (i.e. aucun nœud intermédiaire, aucun client) n'avait demandé au préalable la transmission des représentations, le serveur 30 commence la transmission effective de paquets de données transportant chaque représentation vers la passerelle 34. Sinon, si les représentations étaient en cours de transmission vers au moins un autre nœud du réseau, le dernier routeur multipoint en commun entre la passerelle 34 et au moins un desdits autres nœuds du réseau duplique les paquets de données transportant chaque représentation pour qu'ils soient acheminés vers la passerelle 34.

Dans une étape 502, la passerelle 34 reçoit chaque représentation de la vidéo immersive. De cette manière la passerelle 34 reçoit en permanence chaque représentation de la vidéo immersive. La passerelle 34 conserve en mémoire les paquets correspondant à chaque représentation pendant un temps T prédéfini et les efface ensuite. Dans un mode de réalisation, le temps T est égal à une seconde.

La **Fig. 5B** illustre schématiquement un procédé de diffusion d'une vidéo immersive.

On suppose que l'utilisateur a mis sous tension ses lunettes immersives et donc que le client 131 est activé. Le client 131 a donc reçu le fichier manifeste. Par ailleurs, les lunettes actives comprennent un module de positionnement non décrit capable de fournir une description du point de vue de l'utilisateur. Par exemple, ce module de positionnement fournit un azimut et un angle d'élévation. Dans un mode de réalisation, le module de positionnement fournit de plus une information représentative d'une vitesse de changement de point de vue. Par exemple, lorsque l'utilisateur porte des lunettes immersives, la vitesse de changement de point de vue est une vitesse de rotation de la tête de l'utilisateur. Dans d'autres modes de réalisation, le point de vue sur la vidéo immersive (et donc les changements de points de vue) peut être contrôlé par une télécommande, un pointeur, un gant ou toute autre interface adaptée. Chacune de ces interfaces est apte à fournir une information représentative d'une vitesse de changement de point de vue au module de positionnement.

Dans la Fig. 5B, les flèches verticales représentent un axe de temps.

Le procédé décrit en relation avec la Fig. 5B est mis en œuvre à intervalles réguliers prédéterminés, par exemple, toutes les « 20 »ms de manière à prendre en compte rapidement chaque changement de point de vue de l'utilisateur ou suite à un changement de point de vue de l'utilisateur.

Dans une étape 510, le client 131 obtient une description du point de vue de l'utilisateur.

Dans une étape 511, le client 131 détermine à partir de ladite description et du fichier manifeste, une représentation d'une version de la vidéo immersive correspondant audit point de vue. Par exemple, à partir de l'azimut et de l'angle d'élévation, le client détermine une droite et détermine quelle version correspond à un point de vue traversé par cette droite. La version traversée par la droite est la version déterminée. Dans un exemple qui n'appartient pas aux modes de réalisation revendiqués où le serveur stocke une seule représentation pour chaque version, le client choisit la représentation de la version déterminée. Dans un mode de réalisation revendiqué, le client choisit une représentation de la version déterminée en fonction de la qualité de sa connexion au réseau.

Dans une étape 512, le client 131 transmet à la passerelle 34 une requête en vue de recevoir la représentation déterminée.

Dans une étape 513, la passerelle 34 reçoit ladite requête.

Dans une étape 514, la passerelle 34 transmet au client 131 la représentation déterminée.

Dans une étape 515, le client 131 reçoit de la passerelle 34 la représentation déterminée, la décode et l'affiche sur le dispositif d'affichage d'images intégré aux lunettes immersives. Le client 131 s'étant adressé à la passerelle 34 et non au serveur 30 pour obtenir une représentation de la version correspondant au point de vue de l'utilisateur, le temps de latence pour obtenir cette représentation est raccourci et l'utilisateur passe de manière quasi instantanée d'une représentation de la vidéo immersive à une autre.

On constate que dans le procédé décrit en relation avec la Fig. 5B, la passerelle 34 répond à chaque requête émanant de l'équipement de visualisation en vue de recevoir une représentation correspondant à un point de vue de l'utilisateur.

Le client 131 mesure son débit de réception en appliquant des techniques connues. Par exemple, le client mesure le débit de réception sur un GOP précédant le GOP en cours de réception. Dans ce cas, en plus de demander une représentation correspondant au point de vue de l'utilisateur, le client 131 demande à la passerelle 34 une représentation correspondant à son débit de réception. Pour ce faire, le client 131 sélectionne lors de l'étape 511 dans le fichier manifeste une représentation correspondant au point de vue de l'utilisateur et dont le débit est inférieur ou égal à son débit de réception.

Dans un mode de réalisation, lors de l'étape 512, le client 131 transmet une requête en vue de recevoir la représentation déterminée au serveur 30. Mais, lors de l'étape 513, la passerelle 34 reconnaît cette requête et l'intercepte. Ainsi, la passerelle 34 empêche la requête d'atteindre le serveur 30 car elle va répondre elle-même à cette requête à la place du serveur 30. Les étapes 514 et 515 restent identiques. De cette manière, le client 131 n'a pas besoin de savoir que la passerelle 34 implémente l'invention.

Dans un mode de réalisation, le client 131 transmet la description du point de vue de l'utilisateur à la passerelle 34 dans une requête en vue de recevoir une représentation correspondant à ladite description lors de l'étape 512. Dans ce cas, la passerelle 34 exécute l'étape 511 en lieu et place du client 131 suite à l'étape 513 pour déterminer, à partir du fichier manifeste, la représentation correspondant à ladite description.

Dans une mise en œuvre particulière, suite à la réception d'une requête en vue de recevoir une représentation de la vidéo immersive correspondant à un point de vue, la passerelle 34 remet en œuvre le procédé décrit en relation avec la Fig. 5A mais ne s'abonne qu'à un sous-ensemble des groupes multipoints. Dans un mode de réalisation, ce sous-ensemble de groupes multipoints, dit sous-ensemble global, est déterminé par la passerelle 34. Ce sous-ensemble comprend dans tous les cas le groupe multipoint permettant d'obtenir la représentation correspondant au point de vue de l'utilisateur, dit groupe multipoint de base, et un sous-ensemble de groupes multipoints comprenant au moins un groupe multipoint correspondant à une représentation sélectionnée suivant un critère prédéfini, dit sous-ensemble supplémentaire. La passerelle 34 se désabonne de tous les groupes multipoints n'appartenant pas au sous-ensemble global. Ce mode de réalisation permet de réduire le débit entre le serveur 30 et la passerelle 34.

Dans cette mise en œuvre particulière, lorsque plusieurs clients affichent la même vidéo immersive en même temps, la passerelle 34 s'abonne à l'union des sousensembles globaux déterminés pour chaque client.

Dans un mode de réalisation, le sous-ensemble supplémentaire comprend des groupes multipoints permettant à la passerelle 34 d'obtenir des représentations correspondant à des points de vue proches selon un critère de proximité prédéfini du point de vue de l'utilisateur.

Dans un mode de réalisation, lors de l'étape 512, le client 131 transmet à la passerelle 34 une description du point de vue de l'utilisateur. Par exemple, le client 131 transmet à la passerelle 34 une valeur représentative d'un azimut $a_c$ et une valeur représentative d'une élévation $e_c$. Si le fichier manifeste comprend « 30 » représentations décrites par leur azimute $A_i$ et leur élévation $E_i$, $i$ étant un entier compris entre « 0 » et « 29 », la passerelle 34 trie les représentations en fonction d'un écart $\Delta$ du point de vue auquel chacune correspond par rapport au point de vue de l'utilisateur. Ledit écart $\Delta$ peut par exemple être calculé de la manière suivante :

$$\Delta = (\cos(A_i)\cos(E_i) - \cos(a_c)\cos(e_c))^2 + (\cos(A_i)\sin(E_i) - \cos(a_c)\sin(e_c))^2 + (\sin(E_i) - \sin(e_c))^2$$

Les représentations sont classées par la passerelle 34 dans une liste par ordre croissant d'écarts $\Delta$. Le sous-ensemble supplémentaire comprend, par exemple, des groupes multipoints permettant d'obtenir les $N$ premières représentations de la liste. En sélectionnant ces groupes multipoints, la passerelle 34 sélectionne des points de vue sur la vidéo immersive, dits *points de vue sélectionnés,* proches du point de vue de l'utilisateur. Dans un mode de réalisation $N=10$.

Dans un mode de réalisation, lors de l'étape 512, le client 131 transmet à la passerelle 34 une description du point de vue de l'utilisateur et une information représentative du débit de réception du client 131. Le sous-ensemble supplémentaire comprend alors uniquement des groupes multipoints permettant d'obtenir des représentations correspondant aux points de vue sélectionnés et dont le débit est inférieur ou égal au débit de réception du client 131.

Dans un autre mode de réalisation, lors de l'étape 512, le client 131 transmet à la passerelle 34 une requête pour une représentation d'une version correspondant à un point de vue. La passerelle 34 détermine l'azimut $a_c$ et l'élévation $e_c$ du point de vue de l'utilisateur comme étant l'azimut et l'élévation de la version demandée par le client. Ainsi le client 131 n'a pas besoin d'être adapté pour utiliser une passerelle qui implémente ce mode de réalisation.

Il est connu que lorsqu'un utilisateur bouge rapidement la tête, il est peu sensible à la qualité de la vidéo immersive qu'il visualise. Il est possible alors pour la passerelle 34 de prendre en compte une vitesse de rotation de la tête de l'utilisateur lors de la détermination du sous-ensemble supplémentaire. Ainsi, si la rotation de la tête de l'utilisateur est rapide, la passerelle 34 s'abonne à des groupes multipoints permettant d'obtenir des représentations correspondant aux point de vues sélectionnés de faible qualité, *i.e.* dont le débit est faible (voire dont la qualité est la plus faible possible, *i.e.* dont le débit est minimum) alors que si la rotation de la tête est lente, la passerelle 34 s'abonne à des groupes multipoints permettant d'obtenir des représentations correspondant aux points de vue sélectionnés dont le débit est le plus proche possible par valeur inférieure du débit de réception du client 131. Ainsi, lorsque le mouvement est rapide, le sous-ensemble supplémentaire peut contenir un nombre plus important de points de vue afin de s'adapter au mieux à la direction du point de vue de l'utilisateur sans augmenter le débit de données dans le réseau global.

Dans un mode de réalisation revendiqué, le fichier manifeste comprend pour chaque représentation de la vidéo immersive, un champ, appelé champ SPEED, comprenant une valeur représentative d'une vitesse de rotation maximale au-delà de laquelle il est considéré que l'utilisateur ne perçoit plus un gain de qualité apporté par une représentation par rapport à une représentation ayant un débit inférieur. Dans ce mode de réalisation, lors de l'étape 512, le client 131 transmet à la passerelle 34, une description du point de vue du client 131, une information représentative du débit de réception du client 131 et une information représentative d'une vitesse de rotation de la tête de l'utilisateur. Le sous-ensemble supplémentaire comprend alors uniquement des groupes multipoints permettant d'obtenir des représentations correspondant aux points de vue sélectionnés, dont le débit est inférieur ou égal au débit de réception du client 131 et dont la valeur du champ SPEED est supérieure à la vitesse de mouvement de la tête de l'utilisateur.

Dans un mode de réalisation, la passerelle 34 possède en mémoire une table de correspondance donnant pour chaque vitesse de rotation d'une pluralité de vitesses de rotation, un débit maximum au-delà duquel l'utilisateur ne perçoit plus de gain en qualité. Dans ce mode de réalisation, lors de l'étape 512, le client 131 transmet à la passerelle 34, une description du point de vue du client 131, une information représentative du débit de réception du client 131 et une information représentative d'une vitesse de rotation de la tête de l'utilisateur. Le sous-ensemble supplémentaire comprend alors uniquement des groupes multipoints permettant d'obtenir des représentations correspondant aux points de vue sélectionnés, dont le débit est inférieur ou égal au débit de réception du client 131 et inférieur ou égal au débit maximum déterminé à partir de la vitesse de rotation de la tête du client et de la table de correspondance.

Jusqu'à présent, nous avons considéré que le sous-ensemble global était déterminé par la passerelle 34. Le client 131 possède toutes les informations nécessaires à la détermination du sous-ensemble global (Fichier manifeste, description du point de vue de l'utilisateur, débit de réception du client 131, vitesse de rotation de la tête du client, table de correspondance). Le client 131 est donc capable de déterminer lui aussi le sous-ensemble global en appliquant les mêmes méthodes que la passerelle 34. Dans un mode de réalisation, c'est le client 131 qui détermine le sous-ensemble global en lieu et place de la passerelle 34 lors de l'étape 511. Lors de l'étape 512, le client 131 transmet à la passerelle 34 une information représentative du sous-ensemble global. Lors de l'étape 501, la passerelle 34 s'abonne aux groupes multipoints qui lui ont été indiqués par le client 131.

À partir de la description du point de vue de l'utilisateur et de la vitesse de rotation de la tête de l'utilisateur, il est possible de déterminer le point de vue que regardera l'utilisateur à un instant donné. Dans un mode de réalisation, lorsque le client 131 commence à afficher un GOP, il obtient une description du point de vue du client 131 et une information représentative d'une vitesse de rotation de la tête de l'utilisateur. À partir de ces informations, le client 131 détermine une description de son point de vue au début du prochain GOP, dit point de vue anticipé. Lors de l'étape 511, à partir de la description du point de vue anticipé et du fichier manifeste, le client 131 détermine une représentation d'une version de la vidéo immersive correspondant audit point de vue anticipé et transmet à la passerelle 34 une requête en vue de recevoir la représentation déterminée lors de l'étape 512. De cette manière, le prochain GOP correspond au point de vue anticipé.

## Revendications

1.  Procédé de communication d'une vidéo immersive entre un serveur et un équipement de visualisation (13) reliés entre eux par un lien de communication comprenant un nœud réseau intermédiaire (34), ladite vidéo immersive étant stockée sur le serveur (30) sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent, le procédé étant exécuté à intervalles réguliers prédéterminés ou suite à un changement de point de vue de l'utilisateur et comprend :

    obtenir (510) une description d'un point de vue de l'utilisateur ;
    transmettre (512) en direction du serveur une première requête en vue de recevoir une représentation correspondant audit point de vue, dite représentation sélectionnée, déterminée (511) à partir d'une description de chaque représentation et de la description du point de vue de l'utilisateur ;
    recevoir (515) du nœud réseau intermédiaire (34) la représentation sélectionnée en réponse à la première requête, le nœud réseau intermédiaire recevant (502) en permanence au moins un sous-ensemble des représentations, dit sous-ensemble global, de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation ;

    la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

2.  Procédé selon la revendication 1, **caractérisé en ce que** l'équipement de visualisation obtient une information représentative de son débit de réception, et la représentation sélectionnée est déterminée parmi des représentations de la version correspondant audit point de vue ayant un débit inférieur ou égal au débit de réception.

3. Procédé selon la revendication 1 ou 2, **caractérisé en ce que** le sous-ensemble global comprend la représentation sélectionnée et un sous-ensemble de représentations, dit sous-ensemble supplémentaire, comprenant au moins une représentation déterminée suivant un critère prédéfini.

4. Procédé selon la revendication 3, **caractérisé en ce que** le sous-ensemble supplémentaire comprend des représentations correspondant à des points de vue proches selon un critère de proximité prédéfini du point de vue de l'utilisateur.

5. Procédé selon l'une quelconque des revendications 1 à 4, **caractérisé en ce que** le sous-ensemble global est déterminé par le nœud réseau intermédiaire ou par l'équipement de visualisation.

6. Procédé selon l'une quelconque des revendications 1 à 5, **caractérisé en ce que** l'équipement de visualisation obtient la description d'un point de vue de l'utilisateur, dit point de vue courant, et une information représentative d'une vitesse de changement de point de vue de l'utilisateur pendant une visualisation d'un groupe d'images courant, et détermine une représentation d'une version à recevoir pour un groupe d'images suivant le groupe d'images courant à partir d'un point de vue, dit point de vue anticipé, déterminé à partir du point de vue courant et de ladite vitesse de changement de point de vue.

7. Procédé selon l'une quelconque des revendications précédentes, **caractérisé en ce que** le nœud réseau intermédiaire est une passerelle résidentielle ou un multiplexeur d'accès à une ligne d'abonné numérique.

8. Procédé de communication d'une vidéo immersive entre un serveur et un équipement de visualisation (13) reliés entre eux par un lien de communication comprenant un nœud réseau intermédiaire (34), ladite vidéo immersive étant stockée sur le serveur (30) sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent, le procédé étant exécuté à intervalles réguliers prédéterminés ou suite à un changement de point de vue de l'utilisateur et comprend :

   recevoir (513) une première requête de l'équipement de visualisation dans laquelle l'équipement de visualisation demande à recevoir une représentation correspondant à un point de vue de l'utilisateur sur la vidéo immersive, dite représentation sélectionnée, déterminée (511) à partir d'une description de chaque représentation et d'une information représentative du point de vue de l'utilisateur ;
   transmettre (514) la représentation sélectionnée en réponse à la première requête, le nœud réseau intermédiaire recevant (502) en permanence au moins un sous-ensemble des représentations, dit sous-ensemble global, de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation ;

   la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

9. Équipement de visualisation d'une vidéo immersive relié à un serveur par un lien de communication comprenant un nœud réseau intermédiaire (34), ladite vidéo immersive étant stockée sur le serveur (30) sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent, l'équipement de visualisation comprenant :

des moyens d'obtention (510) pour obtenir une description d'un point de vue de l'utilisateur ;
des moyens de transmission (512) pour transmettre en direction du serveur une première requête en vue de recevoir une représentation correspondant audit point de vue, dite représentation sélectionnée, déterminée (511) à partir d'une description de chaque représentation et de la description du point de vue de l'utilisateur ;

des moyens de réception (515) pour recevoir du nœud réseau intermédiaire (34) la représentation sélectionnée en réponse à la première requête, le nœud réseau intermédiaire recevant (502) en permanence au moins un sous-ensemble, dit sous-ensemble global, des représentations de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation ;
la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

10. Nœud réseau intermédiaire situé sur un lien de communication reliant un serveur à un équipement de visualisation de vidéos immersives, une vidéo immersive étant stockée sur le serveur (30) sous forme d'une pluralité de versions, chaque version correspond à un point de vue différent sur la vidéo immersive et l'ensemble des versions couvre un ensemble de points de vue possibles sur la vidéo immersive, chaque version possède une qualité maximale dans une zone de la vidéo immersive correspondant au champ visuel d'un utilisateur visualisant la vidéo immersive suivant ledit point de vue, et une qualité inférieure à la qualité maximale en dehors de ladite zone, le serveur stockant une pluralité de représentations pour chaque version sous forme d'un flux vidéo binaire compressé comprenant une suite de groupes d'images de durée prédéfinie décodables indépendamment, chaque représentation d'une même version ayant un débit différent, le nœud réseau intermédiaire comprenant :

des moyens de réception (513) pour recevoir une première requête de l'équipement de visualisation dans laquelle l'équipement de visualisation demande à recevoir une représentation correspondant à un point de vue de l'utilisateur sur la vidéo immersive, dite représentation sélectionnée, déterminée (511) à partir d'une description de chaque représentation et d'une information représentative du point de vue de l'utilisateur ;
des moyens de transmission (514) pour transmettre la représentation sélectionnée en réponse à la première requête, le nœud réseau intermédiaire recevant (502) en permanence au moins un sous-ensemble, dit sous-ensemble global, des représentations de la vidéo immersive suite à une transmission préalable par le nœud réseau intermédiaire d'une deuxième requête audit serveur en vue de recevoir ledit sous-ensemble de la part du serveur et répondant à chaque première requête émanant de l'équipement de visualisation ;

la description de chaque représentation étant stockée par le serveur sous forme d'un fichier manifeste partagé avec le nœud réseau intermédiaire et/ou l'équipement de visualisation et comprenant, pour chaque représentation, un champ indiquant le point de vue correspondant à ladite représentation et un champ représentant une vitesse de changement de point de vue maximale au-delà de laquelle il est considéré que l'utilisateur ne perçoit plus un gain de qualité apporté par une représentation par rapport à une représentation ayant un débit inférieur, chaque représentation du sous-ensemble global étant déterminée de sorte qu'une valeur dudit champ soit supérieure à la vitesse de changement de point de vue de l'utilisateur.

11. Système permettant une communication d'une vidéo immersive comprenant un équipement de visualisation selon la revendication 9 et un nœud réseau intermédiaire selon la revendication 10.

12. Programme d'ordinateur, **caractérisé en ce qu'**il comprend des instructions pour mettre en œuvre, par un dispositif (131, 34), le procédé selon l'une quelconque des revendications 1 à 7 ou le procédé selon la revendication 8, lorsque ledit programme est exécuté par un processeur dudit dispositif (131, 34).

13. Moyens de stockage, **caractérisés en ce qu'**ils stockent un programme d'ordinateur comprenant des instructions pour mettre en œuvre, par un dispositif (131, 34), le procédé selon l'une quelconque des revendications 1 à 7 ou le procédé selon la revendication 8, lorsque ledit programme est exécuté par un processeur dudit dispositif (131,34).

**Patentansprüche**

1. Kommunikationsverfahren für ein immersives Video zwischen einem Server und einer Visualisierungsvorrichtung (13), die durch eine Kommunikationsverbindung miteinander verbunden sind, die einen Netzzwischenknoten (34) umfasst, wobei das immersive Video auf dem Server (30) in Form einer Mehrzahl von Versionen gespeichert wird, wobei jede Version einem unterschiedlichen Ansichtspunkt auf das immersive Video entspricht und die Menge der Versionen eine Menge von möglichen Ansichtspunkten auf das immersive Video abdeckt, jede Version eine maximale Qualität in einem Bereich des immersiven Videos, der dem Sichtfeld eines Benutzers entspricht, der das immersive Video gemäß dem Ansichtspunkt darstellt, und eine niedrigere Qualität als die maximale Qualität außerhalb des Bereichs aufweist, wobei der Server eine Mehrzahl von Darstellungen für jede Version in Form eines komprimierten binären Videostroms speichert, der eine Folge von Bildergruppen mit einer vorgegebenen Dauer umfasst, die unabhängig decodierbar sind, wobei jede Darstellung ein und derselben Version eine unterschiedliche Bitrate aufweist, wobei das Verfahren in vorbestimmten regelmäßigen Abständen oder im Anschluss an eine Änderung des Ansichtspunkts des Benutzers ausgeführt wird und Folgendes umfasst:

   Erhalten (510) einer Beschreibung eines Ansichtspunkts des Benutzers;
   Übertragen (512) einer ersten Anfrage in Richtung des Servers, um eine Darstellung zu empfangen, die dem Ansichtspunkt entspricht, ausgewählte Darstellung genannt, die anhand einer Beschreibung jeder Darstellung und der Beschreibung des Ansichtspunkts des Benutzers bestimmt (511) wird;
   Empfangen (515) der ausgewählten Darstellung vom Netzzwischenknoten (34) als Antwort auf die erste Anfrage, wobei der Netzzwischenknoten permanent wenigstens eine Teilmenge der Darstellungen, Sammelteilmenge genannt, des immersiven Videos im Anschluss an eine vorherige Übertragung einer zweiten Anfrage an den Server durch den Netzzwischenknoten zum Empfangen der Teilmenge vom Server empfängt (502) und auf jede erste Anfrage von der Visualisierungsvorrichtung antwortet;
   wobei die Beschreibung jeder Darstellung vom Server in Form einer Manifestdatei gespeichert wird, die mit dem Netzzwischenknoten und/oder der Visualisierungsvorrichtung gemeinsam genutzt wird und für jede Darstellung ein Feld, das den Ansichtspunkt angibt, der der Darstellung entspricht, und ein Feld, das eine maximale Ansichtspunkt-Änderungsgeschwindigkeit darstellt, umfasst, über der davon ausgegangen wird, dass der Benutzer keinen von einer Darstellung gelieferten Qualitätsgewinn im Verhältnis zu einer Darstellung mit einer niedrigeren Bitrate mehr wahrnimmt, wobei jede Darstellung der Sammelteilmenge so bestimmt wird, dass ein Wert des Felds höher als die Änderungsgeschwindigkeit des Ansichtspunkts des Benutzers ist.

2. Verfahren nach Anspruch 1, **dadurch gekennzeichnet, dass** die Visualisierungsvorrichtung eine Information erhält, die für ihre Empfangsbitrate repräsentativ ist, und die ausgewählte Darstellung aus Darstellungen der Version bestimmt wird, die dem Ansichtspunkt mit einer Bitrate kleiner als oder gleich der Empfangsbitrate entspricht.

3. Verfahren nach Anspruch 1 oder 2, **dadurch gekennzeichnet, dass** die Sammelteilmenge die ausgewählte Darstellung und eine Teilmenge von Darstellungen, zusätzliche Teilmenge genannt, umfasst, die wenigstens eine Darstellung umfasst, die nach einem vorgegebenen Kriterium bestimmt wird.

4. Verfahren nach Anspruch 3, **dadurch gekennzeichnet, dass** die zusätzliche Teilmenge Darstellungen umfasst, die Ansichtspunkten entsprechen, die nach einem vorgegeben Nähekriterium dem Ansichtspunkt des Benutzers nahe sind.

5. Verfahren nach einem der Ansprüche 1 bis 4, **dadurch gekennzeichnet, dass** die Sammelteilmenge vom Netzzwischenknoten oder von der Visualisierungsvorrichtung bestimmt wird.

6. Verfahren nach einem der Ansprüche 1 bis 5, **dadurch gekennzeichnet, dass** die Visualisierungsvorrichtung die Beschreibung eines Ansichtspunkts des Benutzers, aktueller Ansichtspunkt genannt, und eine Information erhält, die für eine Änderungsgeschwindigkeit des Ansichtspunkts des Benutzers während einer Visualisierung einer aktuellen Bildergruppe repräsentativ ist, und eine Darstellung einer zu empfangenden Version für eine Bildergruppe nach der aktuellen Bildergruppe anhand eines Ansichtspunkts, antizipierter Ansichtspunkt genannt, bestimmt, der anhand des aktuellen Ansichtspunkts und der Ansichtspunkt-Änderungsgeschwindigkeit bestimmt wird.

7. Verfahren nach einem der vorhergehenden Ansprüche, **dadurch gekennzeichnet, dass** der Netzzwischenknoten ein Residential Gateway oder ein Multiplexer für Zugang zu einer digitalen Teilnehmerleitung ist.

8. Kommunikationsverfahren für ein immersives Video zwischen einem Server und einer Visualisierungsvorrichtung (13), die durch eine Kommunikationsverbindung miteinander verbunden sind, die einen Netzzwischenknoten (34) umfasst, wobei das immersive Video auf dem Server (30) in Form einer Mehrzahl von Versionen gespeichert wird, wobei jede Version einem unterschiedlichen Ansichtspunkt auf das immersive Video entspricht und die Menge der Versionen eine Menge von möglichen Ansichtspunkten auf das immersive Video abdeckt, jede Version eine maximale Qualität in einem Bereich des immersiven Videos, der dem Sichtfeld eines Benutzers entspricht, der das immersive Video gemäß dem Ansichtspunkt darstellt, und eine niedrigere Qualität als die maximale Qualität außerhalb des Bereichs aufweist, wobei der Server eine Mehrzahl von Darstellungen für jede Version in Form eines komprimierten binären Videostroms speichert, der eine Folge von Bildergruppen mit einer vorgegebenen Dauer umfasst, die unabhängig decodierbar sind, wobei jede Darstellung ein und derselben Version eine unterschiedliche Bitrate aufweist, wobei das Verfahren in vorbestimmten regelmäßigen Abständen oder im Anschluss an eine Änderung des Ansichtspunkts des Benutzers ausgeführt wird und Folgendes umfasst:

Empfangen (513) einer ersten Anfrage der Visualisierungsvorrichtung, in der die Visualisierungsvorrichtung anfordert, eine Darstellung zu empfangen, die einem Ansichtspunkt des Benutzers auf das immersive Video entspricht, ausgewählte Darstellung genannt, die anhand einer Beschreibung jeder Darstellung und einer Information, die für den Ansichtspunkt des Benutzers repräsentativ ist, bestimmt (511) wird;

Übertragen (514) der ausgewählten Darstellung als Antwort auf die erste Anfrage, wobei der Netzzwischenknoten permanent wenigstens eine Teilmenge der Darstellungen, Sammelteilmenge genannt, des immersiven Videos im Anschluss an eine vorherige Übertragung einer zweiten Anfrage an den Server durch den Netzzwischenknoten zum Empfangen der Teilmenge vom Server empfängt (502) und auf jede erste Anfrage von der Visualisierungsvorrichtung antwortet;

wobei die Beschreibung jeder Darstellung vom Server in Form einer Manifestdatei gespeichert wird, die mit dem Netzzwischenknoten und/oder der Visualisierungsvorrichtung gemeinsam genutzt wird und für jede Darstellung ein Feld, das den Ansichtspunkt angibt, der der Darstellung entspricht, und ein Feld, das eine maximale Ansichtspunkt-Änderungsgeschwindigkeit darstellt, umfasst, über der davon ausgegangen wird, dass der Benutzer keinen von einer Darstellung gelieferten Qualitätsgewinn im Verhältnis zu einer Darstellung mit einer niedrigeren Bitrate mehr wahrnimmt, wobei jede Darstellung der Sammelteilmenge so bestimmt wird, dass ein Wert des Felds höher als die Änderungsgeschwindigkeit des Ansichtspunkts des Benutzers ist.

9. Visualisierungsvorrichtung für ein immersives Video, die durch eine Kommunikationsverbindung, die einen Netzzwischenknoten (34) umfasst, mit einem Server verbunden ist, wobei das immersive Video auf dem Server (30) in Form einer Mehrzahl von Versionen gespeichert wird, wobei jede Version einem unterschiedlichen Ansichtspunkt auf das immersive Video entspricht und die Menge der Versionen eine Menge von möglichen Ansichtspunkten auf das immersive Video abdeckt, jede Version eine maximale Qualität in einem Bereich des immersiven Videos, der dem Sichtfeld eines Benutzers entspricht, der das immersive Video gemäß dem Ansichtspunkt darstellt, und eine niedrigere Qualität als die maximale Qualität außerhalb des Bereichs aufweist, wobei der Server eine Mehrzahl von Darstellungen für jede Version in Form eines komprimierten binären Videostroms speichert, der eine Folge von Bildergruppen mit einer vorgegebenen Dauer umfasst, die unabhängig decodierbar sind, wobei jede Darstellung ein und derselben Version eine unterschiedliche Bitrate aufweist, wobei die Visualisierungsvorrichtung Folgendes umfasst:

Mittel zum Erhalten (510) zum Erhalten einer Beschreibung eines Ansichtspunkts des Benutzers;

Übertragungsmittel (512) zum Übertragen einer ersten Anfrage in Richtung des Servers, um eine Darstellung zu empfangen, die dem Ansichtspunkt entspricht, ausgewählte Darstellung genannt, die anhand einer Beschreibung jeder Darstellung und der Beschreibung des Ansichtspunkts des Benutzers bestimmt (511) wird;

Empfangsmittel (515) zum Empfangen der ausgewählten Darstellung vom Netzzwischenknoten (34) als Antwort auf die erste Anfrage, wobei der Netzzwischenknoten permanent wenigstens eine Teilmenge der Darstellungen, Sammelteilmenge genannt, der Darstellungen des immersiven Videos im Anschluss an eine vorherige Übertragung einer zweiten Anfrage an den Server durch den Netzzwischenknoten zum Empfangen der Teilmenge vom Server empfängt (502) und auf jede erste Anfrage von der Visualisierungsvorrichtung antwortet;

wobei die Beschreibung jeder Darstellung vom Server in Form einer Manifestdatei gespeichert wird, die mit dem Netzzwischenknoten und/oder der Visualisierungsvorrichtung gemeinsam genutzt wird und für jede Darstellung ein Feld, das den Ansichtspunkt angibt, der der Darstellung entspricht, und ein Feld, das eine maximale Ansichtspunkt-Änderungsgeschwindigkeit darstellt, umfasst, über der davon ausgegangen wird, dass der Benutzer keinen von einer Darstellung gelieferten Qualitätsgewinn im Verhältnis zu einer Darstellung mit einer niedrigeren Bitrate mehr wahrnimmt, wobei jede Darstellung der Sammelteilmenge so bestimmt wird, dass ein Wert des Felds höher als die Änderungsgeschwindigkeit des Ansichtspunkts des Benutzers ist.

10. Netzzwischenknoten auf einer Kommunikationsverbindung, die einen Server mit einer Visualisierungsvorrichtung für immersive Videos verbindet, wobei ein immersives Video auf dem Server (30) in Form einer Mehrzahl von Versionen gespeichert ist, wobei jede Version einem unterschiedlichen Ansichtspunkt auf das immersive Video entspricht und die Menge der Versionen eine Menge von möglichen Ansichtspunkten auf das immersive Video abdeckt, jede Version eine maximale Qualität in einem Bereich des immersiven Videos, der dem Sichtfeld eines Benutzers entspricht, der das immersive Video gemäß dem Ansichtspunkt darstellt, und eine niedrigere Qualität als die maximale Qualität außerhalb des Bereichs aufweist, wobei der Server eine Mehrzahl von Darstellungen für jede Version in Form eines komprimierten binären Videostroms speichert, der eine Folge von Bildergruppen mit einer vorgegebenen Dauer umfasst, die unabhängig decodierbar sind, wobei jede Darstellung ein und derselben Version eine unterschiedliche Bitrate aufweist, wobei der Netzzwischenknoten Folgendes umfasst:

Empfangsmittel (513) zum Empfangen einer ersten Anfrage der Visualisierungsvorrichtung, in der die Visualisierungsvorrichtung anfordert, eine Darstellung zu empfangen, die einem Ansichtspunkt des Benutzers auf das immersive Video entspricht, ausgewählte Darstellung genannt, die anhand einer Beschreibung jeder Darstellung und einer Information, die für den Ansichtspunkt des Benutzers repräsentativ ist, bestimmt (511) wird;
Übertragungsmittel (514) zum Übertragen der ausgewählten Darstellung als Antwort auf die erste Anfrage, wobei der Netzzwischenknoten permanent wenigstens eine Sammelteilmenge der Darstellungen des immersiven Videos im Anschluss an eine vorherige Übertragung einer zweiten Anfrage an den Server durch den Netzzwischenknoten zum Empfangen der Teilmenge vom Server empfängt (502) und auf jede erste Anfrage von der Visualisierungsvorrichtung antwortet;
wobei die Beschreibung jeder Darstellung vom Server in Form einer Manifestdatei gespeichert wird, die mit dem Netzzwischenknoten und/oder der Visualisierungsvorrichtung gemeinsam genutzt wird und für jede Darstellung ein Feld, das den Ansichtspunkt angibt, der der Darstellung entspricht, und ein Feld, das eine maximale Ansichtspunkt-Änderungsgeschwindigkeit darstellt, umfasst, über der davon ausgegangen wird, dass der Benutzer keinen von einer Darstellung gelieferten Qualitätsgewinn im Verhältnis zu einer Darstellung mit einer niedrigeren Bitrate mehr wahrnimmt, wobei jede Darstellung der Sammelteilmenge so bestimmt wird, dass ein Wert des Felds höher als die Änderungsgeschwindigkeit des Ansichtspunkts des Benutzers ist.

11. System, das eine Kommunikation eines immersiven Videos ermöglicht, umfassend eine Visualisierungsvorrichtung nach Anspruch 9 und einen Netzzwischenknoten nach Anspruch 10.

12. Computerprogramm, **dadurch gekennzeichnet, dass** es Anweisungen umfasst, um durch eine Vorrichtung (131, 34) das Verfahren nach einem der Ansprüche 1 bis 7 oder das Verfahren nach Anspruch 8 durchzuführen, wenn das Programm von einem Prozessor der Vorrichtung (131, 34) ausgeführt wird.

13. Speichermittel, **dadurch gekennzeichnet, dass** sie ein Computerprogramm speichern, das Anweisungen umfasst, um durch eine Vorrichtung (131, 34) das Verfahren nach einem der Ansprüche 1 bis 7 oder das Verfahren nach Anspruch 8 durchzuführen, wenn das Programm von einem Prozessor der Vorrichtung (131, 34) ausgeführt wird.

## Claims

1. Method for communicating an immersive video between a server and viewing equipment (13) connected together by a communication link comprising an intermediate network node (34), said immersive video being stored on the server (30) in the form of a plurality of versions, each version corresponds to a different points of sight on the immersive video and the set of versions covers a set of possible point of sight on the immersive video, each version has maximum quality in a region of the immersive video corresponding to the visual field of a user viewing the immersive video from said point of sight, and a quality inferior to the maximum quality outside said region, the server storing a plurality of representations for each version in the form of a compressed binary video stream comprising a series of groups of images of predefined duration decodable independently, each representation of one and the same version having a different rate, the method being executed at predetermined regular intervals or following a change of point of sight of the user and comprises:

obtaining (510) a description of a point of sight of the user;
transmitting (512), in the direction of the server, a first request with a view to receiving a representation corresponding to said point of sight, referred to as the selected representation, determined (511) from a description of each representation and from the description of the point of sight of the user;
receiving (515), from the intermediate network node (34), the representation selected in response to the first request, the intermediate network node continuously receiving (502) at least one subset of representations, referred to as a global subset, of the immersive video following a prior transmission by the intermediate network node of a second request to said server with a view to receiving said subset from the server and responding to each first request coming from the viewing equipment;

the description of each representation being stored by the server in the form of a manifest file shared with the intermediate network node and/or the viewing equipment and comprising, for each representation, a field indicating the point of sight corresponding to said representation and a field representing a maximum speed of change of point of sight beyond which it is considered that the user no longer perceives a gain in quality afforded by one representation compared with a representation having a lower rate, each representation of the global subset being determined so that a value of said field is greater than the speed of change of point of sight of the user.

2. Method according to claim 1, **characterised in that** the viewing equipment obtains information representing its reception rate and the selected representation is determined from representations of the version corresponding to said point of sight having a rate less than or equal to the reception rate.

3. Method according to claim 1 or 2, **characterised in that** the subset of representations comprises the selected representation and a subset of representations, referred to as the supplementary subset, comprising at least one representation determined according to a predefined criterion.

4. Method according to claim 3, **characterised in that** the supplementary subset comprises representations corresponding to points of sight that are close according to a predefined proximity criterion of the point of sight of the user.

5. Method according to any of claims 1 to 4, **characterised in that** the global subset is determined by the intermediate network node or by the viewing equipment.

6. Method according to any one of claims 1 to 5, **characterised in that** the viewing equipment obtains the description of a point of sight of the user, referred to as the current point of sight, and information representing a speed of change of point of sight of the user during a viewing of a current group of images, and determines a representation of a version to be received for a group of images following the current group of images from a point of sight, referred to as the anticipated point of sight, determined from the current point of sight and from said speed of change of point of sight.

7. Method according to any of the preceding claims, **characterised in that** the intermediate network node is a residential gateway or a multiplexer for access to a digital subscriber line.

8. Method for communicating an immersive video between a server and viewing equipment (13) connected together by a communication link comprising an intermediate network node (34), said immersive video being stored on the server (30) in the form of a plurality of versions, each version corresponds to a different point of sight on the immersive video and the set of versions covers a set of possible points of sight on the immersive video, each version has maximum quality in a region of the immersive video corresponding to the visual field of a user viewing the immersive video according to said point of sight, and quality inferior to the maximum quality outside said region, the server storing a plurality of representations for each version in the form of a compressed binary video stream comprising a series of groups of images of predefined duration decodable independently, each representation of one and the same version having a different rate, the method being executed at predetermined regular intervals or following a change of point of sight of the user and comprises:

receiving (513) a first request from the viewing equipment in which the viewing equipment asks to receive a representation corresponding to a point of sight of the user on the immersive video, referred to as the selected representation, determined (511) from a description of each representation and from information representing the point of sight of the user;
transmitting (514) the selected representation in response to the first request, the intermediate network node continuously receiving (502) at least one subset of the representations, referred to as a global subset, of the immersive video following a prior transmission by the intermediate network node of a second request to said server with a view to receiving said subset from the server and responding to each first request coming from the viewing equipment;

the description of each representation being stored by the server in the form of a manifest file shared with the intermediate network node and/or the viewing equipment and comprising, for each representation, a field indicating the point of sight corresponding to said representation and a field representing a maximum speed of change of point of sight beyond which it is considered that the user no longer perceives a gain in quality afforded by one representation compared with a representation having a lower rate, each representation of the global subset being determined so that a value of said field is greater than the speed of change of point of sight of the user.

9. Equipment for viewing an immersive video connected to a server by a communication link comprising an intermediate network node (34), said immersive video being stored on the server (30) in the form of a plurality of versions, each version corresponds to a different point of sight on the immersive video and the set of versions covers a set of possible points of sight on the immersive video, each version has maximum quality in a region of the immersive video corresponding to the visual field of a user viewing the immersive video according to said point of sight, and quality inferior to the maximum quality outside said region, the server storing a plurality of representations for each version in the form of a compressed binary video stream comprising a series of groups of images of predefined duration decodable independently, each representation of one and the same version having a different rate, the viewing equipment comprising:

obtaining means (510) for obtaining a description of a point of sight of the user;
transmission means (512) for transmitting in the direction of the server a first request with a view to receiving a representation corresponding to said point of sight, referred to as the selected representation, determined (511) from a description of each representation and from the description of the point of sight of the user;
reception means (515) for receiving the selected representation from the intermediate network node (34) in response to the first request, the intermediate network node continuously receiving (502) at least one subset, referred to as a global subset, of the representations of the immersive video following a prior transmission by the intermediate network node of a second request to said server with a view to receiving said subset from the server and responding to each first request coming from the viewing equipment;

the description of each representation being stored by the server in the form of a manifest file shared with the intermediate network node and/or the viewing equipment and comprising, for each representation, a field indicating the point of sight corresponding to said representation and a field representing a maximum speed of change of point of sight beyond which it is considered that the user no longer perceives a gain in quality afforded by one representation compared with a representation having a lower rate, each representation of the global subset being determined so that a value of said field is greater than the speed of change of point of sight of the user.

10. Intermediate network node located on a communication link connecting a server to equipment for viewing immersive videos, an immersive video being stored on the server (30) in the form of a plurality of versions, each version corresponds to a different point of sight on the immersive video and the set of versions covers a set of possible points of sight on the immersive video, each version has maximum quality in a region of the immersive video corresponding to the visual field of a user viewing the immersive video according to said point of sight, and quality inferior to the maximum quality outside said region, the server storing a plurality of representations for each version in the form of a compressed binary video stream comprising a series of groups of pictures of predefined duration decodable independently, each representation of one and the same version having a different rate, the intermediate network node comprising:

reception means (513) for receiving a first request from the viewing equipment in which the viewing equipment asks to receive a representation corresponding to a point of sight of the user on the immersive video, referred to as the selected representation, determined (511) from a description of each representation and from information representing the point of sight of the user;
transmission means (514) for transmitting the selected representation in response to the first request, the intermediate network node continuously receiving (502) at least one subset, referred to as a global subset, of the representations of the immersive video following a prior transmission by the intermediate network node of a second request to said server with a view to receiving said subset from the server and responding to each first request coming from the viewing equipment;

the description of each representation being stored by the server in the form of a manifest file shared with the intermediate network node and/or the viewing equipment and comprising, for each representation, a field indicating the point of sight corresponding to said representation and a field representing a maximum speed of change of point of sight beyond which it is considered that the user no longer perceives a gain in quality afforded by one representation compared with a representation having a lower rate, each representation of the global subset being determined so that a value of said field is greater than the speed of change of point of sight of the user.

11. System for communicating an immersive video, comprising viewing equipment according to claim 9 and an intermediate network node according to claim 10.

12. Computer program, **characterised in that** it comprises instructions for implementing, by a device (131, 34), the method according to any of claims 1 to 7 or the method according to claim 8, when said program is executed by a processor of said device (131, 34).

13. Storage means, **characterised in that** they store a computer program comprising instructions for implementing, by a device (131, 34), the method according to any of claims 1 to 7 or the method according to claim 8, when said program is executed by a processor of said device (131, 34).

Fig. 1

Fig. 2

3

| Serveur | Internet | Passerelle | Client |

30    32    34    35    131

## Fig. 3

341 CPU    342 RAM    343 ROM    34

340    HDD 344    COM 345

## Fig. 4A

1311 CPU    1312 RAM    1313 ROM    131

1310    HDD 1314    COM 1315

## Fig. 4B

301 CPU    302 RAM    303 ROM    30

300    HDD 304    COM 305

## Fig. 4C

Fig. 5A

Fig. 5B

**RÉFÉRENCES CITÉES DANS LA DESCRIPTION**

**Documents brevets cités dans la description**

- FR 2976149 A1
- US 2016012855 A1